# EUROPÄISCHE PATENTSCHRIFT

(11) **EP 3 564 088 B1**
(45) Veröffentlichungstag und Bekanntmachung des Hinweises auf die Patenterteilung: **06.04.2022**
(21) Anmeldenummer: 18170391.9
(22) Anmeldetag: 02.05.2018
(51) Int. Cl.: B60L 50/00, B61C 3/00, B61D 1/00, B61L 11/00, B61L 15/00, B61L 3/00

(54) **SCHIENENFAHRZEUG MIT EINEM ANSTRIEBSSYSTEM**
RAIL VEHICLE WITH A DRIVE SYSTEM
VÉHICULE SUR RAIL AVEC SYSTÈME D'ENTRAÎNEMENT

(43) Veröffentlichungstag der Anmeldung: 06.11.2019
(73) Patentinhaber: Siemens Mobility GmbH, 81739 München (DE)
(72) Erfinder: Körner, Olaf, 90469 Nürnberg (DE)

(56) Entgegenhaltungen:
- EP-A2- 1 029 732
- CN-A- 104 773 085
- JP-A- 2005 073 314
- JP-A- 2018 057 077
- US-B1- 9 789 871

## Beschreibung

Die Erfindung betrifft ein Schienenfahrzeug mit einem Antriebssystem mit einer Mehrzahl an Antriebsmotoren nach Anspruch 1.

Zur Realisierung eines Antriebs für Schienenfahrzeuge ist es bekannt, permanentmagneterregte Traktionsmotoren (PM-Motoren), Synchron-Reluktanzmaschinen oder Asynchronmaschinen zu verwenden. PM-Traktionsmotoren sind allgemein energieeffizienter als Asynchronmaschinen, da bei nahezu identischen Ständerverlusten beider Maschinen Rotorverluste bei den PM-Traktionsmotoren nahezu komplett entfallen. Die Rotorverluste tragen dabei in etwa mit 25 bis 30 Prozentpunkten zu den Gesamtverlusten der Asynchronmaschinen bei.

Beim Betrieb von Schienenfahrzeugen, insbesondere bei Nahverkehrs- und Regionalverkehrszügen, untergliedert man Bewegungsphasen zwischen zwei Stationen in vier Bewegungsabschnitte: Beschleunigung, Beharrung, Rollen/ Auslauf und Bremsung.

Der Beschleunigungsbereich ist von einer Antriebsleistung des Schienenfahrzeugs und einer Übertragung der Antriebskräfte auf die Räder des Schienenfahrzeugs geprägt. Solange eine Zugkraft des Antriebs des Schienenfahrzeugs größer ist als ein ihm entgegengebrachter Fahrwiderstand, beschleunigt das Schienenfahrzeug. Der Beharrungsabschnitt wird erreicht, wenn sich Zugkraft und Fahrwiderstand (genauer: Fahrwiderstandskraft) entsprechen (mit entgegengesetzten Vorzeichen).

In einer Rollphase bzw. in dem Auslaufabschnitt wird die Zugkraft soweit zurückgenommen, dass das Schienenfahrzeug aufgrund des Fahrwiderstands seine Fahrgeschwindigkeit verringert. Werden zusätzlich Bremskräfte eingesetzt, so geht der Auslaufabschnitt in den Abschnitt der Bremsung über.

Das Zusammenspiel der zuvor genannten Abschnitte bzw. Phasen einer Fahrt des Schienenfahrzeugs wird auch als Fahrspiel bezeichnet.

In den Fahrspielen zwischen den einzelnen Stationen kommt es in den Phasen der Beharrung, des Rollens/Auslaufs und der Bremsung für den oder die Antriebsmotoren zu einem Teillastbetrieb oder sogar zu antriebslosen Rollphasen. Dabei erfolgt ein Betrieb mit 0 bis 50 Prozentpunkten der fahrzeugseitig installierten Gesamtantriebsleistung über einen verhältnismäßig großen Zeitanteil der Gesamtfahrdauer zwischen zwei Stationen. Aus den Stationen heraus wird aber in der Phase der Beschleunigung eine hohe Zugkraft und Antriebsleistung benötigt. Diese hohe Zugkraft und Antriebsleistung bestimmen die Gesamtzahl an angetriebenen Radsätzen und der installierten (Kurzzeit-)Antriebsleistung. Diese hohe Antriebsleistung wird aber während der übrigen Phasen der Fahrspiele bis auf etwaiges regeneratives Bremsen nicht mehr benötigt.

Bei einer Verwendung von Asynchronmaschinen als Antriebsmotoren können mittels Taktsperren einzelner Stromrichter, die die Motoren mit elektrischer Leistung versorgen, einzelne Antriebsmotoren und damit angetriebene Radsätze abgeschaltet werden. In den abgeschalteten Asynchronmaschinen treten dabei keine elektromagnetischen Verluste mehr auf. Die Stromrichtertaktsperre vermeidet dabei auch Verluste in den verwendeten Leistungshalbleitern (Schalt- und Durchlassverluste im Teillastbetrieb). Die verbliebenen aktiven Antriebsmotoren werden nahe einem Vollastpunkt betrieben, wodurch sich höhere Wirkungsgrade erzielen lassen.

Eine Taktsperre ist bei PM-Motoren nicht möglich oder führt zumindest nicht zu einer elektromagnetisch verlustlosen Maschine (bei kleiner Ständerwindungszahl mit geringer induzierter Leerlaufspannung und nahezu keiner Feldschwächung), da der rotierende Permanentmagnetfluss weiterhin Wirbelstrom- und Hystereseverluste in dem in der Maschine verwendeten Eisenkern hervorruft.

Aus genannten Gründen ergibt ein Vergleich des Energieverbrauchs zwischen Asynchronmaschinen und PM- Motoren in Fahrspielen mit langen Roll- oder Auslaufphasen, dass die PM- Motoren keine Energieeinsparung erzielen können oder sogar eine schlechtere Energiebilanz erzielen. Bei einer reinen Verwendung von Asynchronmaschinen treten jedoch die zuvor erwähnten Verluste in den Rotoren der Maschinen auf.

Aus der JP 2005 073314 A ist eine elektrische Notbremsanordnung für ein Schienenfahrzeug bekannt, bei dem ein Synchronmotor und drei Asynchronmotoren parallelgeschaltet sind und bei einer Notbremsung jeweils auf eine gemeinsame Bremslast geschaltet werden.

Der Erfindung liegt die Aufgabe zugrunde, ein Schienenfahrzeug mit einem Antriebssystem bereitzustellen, die die zuvor genannten Nachteile überwindet und eine höhere Energieeffizienz aufweist.

Diese Aufgabe wird gelöst durch ein Schienenfahrzeug mit den Merkmalen des Patentanspruchs 1.

Vorteilhafte Weiterbildungen ergeben sich aus den abhängigen Patentansprüchen.

Das erfindungsgemäße Schienenfahrzeug weist Radsätze auf, die jeweils zwei gegenüberliegend angeordnete Räder umfassen, die wenigstens teilweise von einem Antriebssystem mit einer Mehrzahl an Antriebsmotoren angetrieben werden, wobei das Antriebssystem wenigstens einen permanentmagneterregten Motor und wenigstens einen Asynchronmotor und/oder wenigstens einen Reluktanzmotor als Antriebsmotoren umfasst. Kennzeichnend ist eine Anzahl an Radsätzen, die von einem oder mehreren permanentmagneterregten Motoren angetrieben werden, doppelt so groß ist wie eine Anzahl an Radsätzen, die von einem oder mehreren Asynchronmotoren und/oder Reluktanzmotoren angetrieben werden, oder ist eine Anzahl an Radsätzen, die von einem oder mehreren permanentmagneterregten Motoren angetrieben werden, identisch ist mit einer Anzahl an Radsätzen, die von einem oder mehreren Asynchronmotoren und/oder Reluktanzmotoren angetrieben werden.

Bei dem Schienenfahrzeug kann es sich beispielsweise um einen Nahverkehrs- oder Regionalverkehrszug oder um eine Personen- oder Güterzuglokomotive handeln.

Bei einem Teillastbetrieb des anzutreibenden Schienenfahrzeug kann das erfindungsgemäße Antriebssystem vorteilhafterweise die in diesem Lastbereich verlustbehafteteren Asynchron- und/oder Reluktanzmotoren abschalten. Die Permanentmagneterregung erlaubt im Gegensatz zu dem Asynchronmotor oder dem Reluktanzmotor auch in geringeren Leistungsbereichen hohe Wirkungsgrade und Leistungsfaktoren oder kann mit einer hohen Last betrieben werden (je nach Anteil der Maschinentypen und der erforderlichen Gesamtantriebsleistung).

Durch die Kombination aus permanentmagneterregten Motoren mit Asynchronmotoren und/oder Reluktanzmotoren als Antriebsmotoren lassen sich für Spitzenlastbereiche während der Beschleunigungsphase die Asynchronmotoren und/oder Reluktanzmotoren zusätzlich zu den permanentmagneterregten Motoren zuschalten, um eine maximale Zugkraft und Antriebsleistung zu ermöglichen.

Die Erfindung ermöglicht es daher, die Vorteile von permanentmagneterregten Motoren (hoher Wirkungsgrad auch im Teillastbetrieb) und von Asynchronmotoren und/oder Reluktanzmotoren (einfache verlustfreie Abschaltbarkeit) zu kombinieren und ein energieverbraucheffizientes Antriebssystem bereitzustellen.

Bevorzugt weist die Mehrzahl an Antriebsmotoren des Antriebssystems im Wesentlichen gleiche Ständerelemente auf. Beispielsweise kann ein sechspoliger Fahrmotorständer für die Antriebsmotoren vorgesehen sein, der jeweils entsprechend mit einem zu einem permanentmagneterregten Motor gehörigen Rotor, einem für einen Asynchronmotor ausgelegten Käfigrotor oder mit einem Läufer für einen Reluktanzmotor kombiniert ist. Dadurch lässt sich eine Instandhaltung des Antriebssystems besonders einfach und kostengünstig gestalten.

Ist ein permanenterregter Motor in Kombination mit einem als Synchron-Reluktanzmotor ausgebildeten Reluktanzmotor für das Antriebssystem vorgesehen, können eine im Wesentlichen gleiche Stromrichtertopologie und Antriebsregelung zur Ansteuerung der beiden Motortypen verwendet werden, was den Betrieb und die Wartung/Instandhaltung des Antriebssystems weiter vereinfacht. Ein Synchron-Reluktanzmotor ist dabei ein Drehstrom-Synchronmotor mit einem Rotor (Läufer), der entweder einen sogenannten Flusssperrenschnitt oder ausgeprägte Pole aufweist.

Erfindungsgemäß ist eine Anzahl an Radsätzen, die von einem permanentmagneterregten Motor angetrieben werden, doppelt so groß ist wie eine Anzahl an Radsätzen, die von einem Asynchronmotor und/oder einem Reluktanzmotor angetrieben werden.

Alternativ ist eine Anzahl an Radsätzen, die von einem permanentmagneterregten Motor angetrieben werden, erfindungsgemäß genau so groß wie eine Anzahl an Radsätzen, die von einem Asynchronmotor und/oder einem Reluktanzmotor angetrieben werden. Mit anderen Worten ist die Anzahl an Radsätzen, die von einem permanentmagneterregten Motor angetrieben werden, identisch mit der Anzahl an Radsätzen, die von einem Asynchronmotor und/oder einem Reluktanzmotor angetrieben werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- FIG 1: einen S-Bahn Gliederzug mit Jakobsgestellen in einer Seitenansicht;
- FIG 2: einen Regionalzug mit Doppelstock-Mittelwagen gemäß einer ersten Variante in einer Seitenansicht;
- FIG 3: einen Regionalzug mit Doppelstock-Mittelwagen gemäß einer zweiten Variante in einer Seitenansicht; und
- FIG 4: eine Güterzuglokomotive in einer Seitenansicht.

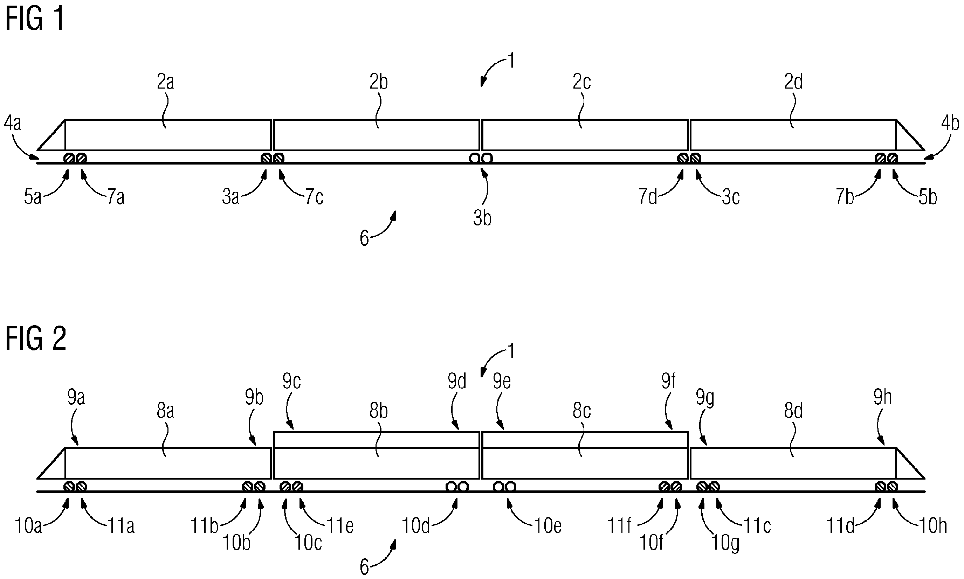

FIG 1 zeigt einen erfindungsgemäßen S-Bahn Gliederzug 1 mit vier Zuggliedern 2a, 2b, 2c, 2d. Ein erstes Zugglied 2a und ein (in FIG 1 rechts daneben angeordnetes) zweites Zugglied 2b stützen sich auf ein erstes gemeinsames Drehgestell 3a ab. Das zweite Zugglied 2b und ein (in FIG 1 rechts daneben angeordnetes) drittes Zugglied 2c stützen sich auf ein zweites gemeinsames Drehgestell 3b ab. Das dritte Zugglied 2c und ein (in FIG 1 rechts daneben angeordnetes) viertes Zugglied 2d stützen sich auf ein drittes gemeinsames Drehgestell 3c ab. Die Drehgestelle 3a, 3b, 3c werden auch als Jakobsdrehgestelle bezeichnet.

Das erste Zugglied 2a (in FIG 1 links außen angeordnet) stützt sich an einer ersten Stirnseite 4a des Gliederzugs 1 auf ein erstes separates Drehgestell 5a ab. Das vierte Zugglied 2d (in FIG 1 rechts außen angeordnet) stützt sich an einer zweiten Stirnseite 4b des Gliederzugs 1 auf ein zweites separates Drehgestell 5b ab. Jedes Drehgestell 3a, 3b, 3c, 5a, 5b umfasst ein Paar Radsätze. Dabei umfasst jeder Radsatz zwei einander gegenüberliegende Räder, die auf einer Schiene (dargestellt) entlang bewegt werden können. Jedes Drehgestell 3a, 3b, 3c, 5a, 5b umfasst demnach vier Räder. Es sind im Rahmen der Erfindung auch Drehgestelle/Fahrwerke 3a, 3b, 3c, 5a, 5b vorsehbar, die jeweils mehr oder weniger Räder bzw. Radsätze aufweisen.

Ein Antriebssystem 6 des Gliederzugs 1 umfasst Asynchronmotoren und/oder Reluktanzmotoren 7a, 7b, die in einem Bereich der beiden separaten Drehgestelle 5a, 5b des ersten bzw. vierten Zugglieds 2a, 2d angeordnet sind und die dazugehörigen Räder antreiben.

Weiterhin umfasst das Antriebssystem 6 des Gliederzugs 1 permanentmagneterregte Motoren 7c, 7d, die in einem Bereich des ersten gemeinsamen Drehgestells 3a zwischen dem ersten Zugglied 2a und dem zweiten Zugglied 2b, und in einem Bereich des dritten gemeinsamen Drehgestells 3c zwischen dem dritten Zugglied 2c und dem vierten Zugglied 2d angeordnet sind. Im zweiten gemeinsamen Drehgestell 3b ist kein Antriebsmotor angeordnet.

FIG 2 zeigt eine erste Variante eines erfindungsgemäßen Regionalzugs 1 mit vier Wagen 8a, 8b, 8c, 8d. Der erste Wagen 8a (in FIG 2 links außen) und der vierte Wagen 8d stellen konventionelle Wagen dar, während der zweite Wagen 8b und der dritte Wagen 8c, die sich zwischen dem ersten Wagen 8a und dem vierten Wagen 8d befinden, als Doppelstock-Mittelwagen 8b, 8c ausgebildet sind. Der zweite Wagen 8b und der dritte Wagen 8c können auch als konventionelle Wagen (keine Doppelstock-Ausführung) ausgebildet sein.

Alle vier Wagen 8a, 8b, 8c, 8d stützen sich jeweils in ihren Endbereichen 9a, 9b, 9c, 9d, 9e, 9f, 9g, 9h auf ein Drehgestell 10a, 10b, 10c, 10d, 10e, 10f, 10g, 10h ab. Jedes Drehgestell 10a, 10b, 10c, 10d, 10e, 10f, 10g, 10h umfasst ein Paar Radsätze. Dabei umfasst jeder Radsatz zwei einander gegenüberliegende Räder, die auf einer Schiene (dargestellt) entlang bewegt werden können. Jedes Drehgestell 10a, 10b, 10c, 10d, 10e, 10f, 10g, 10h umfasst demnach vier Räder. Es sind im Rahmen der Erfindung auch Drehgestelle/Fahrwerke 10a, 10b, 10c, 10d, 10e, 10f, 10g, 10h vorsehbar, die jeweils mehr oder weniger Räder bzw. Radsätze aufweisen.

Ein Antriebssystem 6 des Regionalzugs 1 umfasst permanentmagneterregte Motoren 11a, 11b, 11c, 11d, die in einem Bereich der Drehgestelle 10a, 10b, 10g, 10h des ersten Wagens 8a und des vierten Wagens 8d angeordnet sind.

Das Antriebssystem 6 des Regionalzugs 1 umfasst zudem Asynchronmotoren und/oder Reluktanzmotoren 11e, 11f, die in einem (in FIG 2 links befindlichen) Endbereich 9c des zweiten Wagens 8b und in einem (in FIG 2 rechts befindlichen) Endbereich 9f des dritten Wagens 8c in einem Bereich der dazugehörigen Drehgestelle 10c, 10f angeordnet sind und die dazugehörigen Räder antreiben.

In einem (in FIG 2 rechts befindlichen) Endbereich 9d des zweiten Wagens 8b und in einem (in FIG 2 links befindlichen) Endbereich 9e des dritten Wagens 8c in einem Bereich der dazugehörigen Drehgestelle 10d, 10e ist kein Antriebsmotor angeordnet.

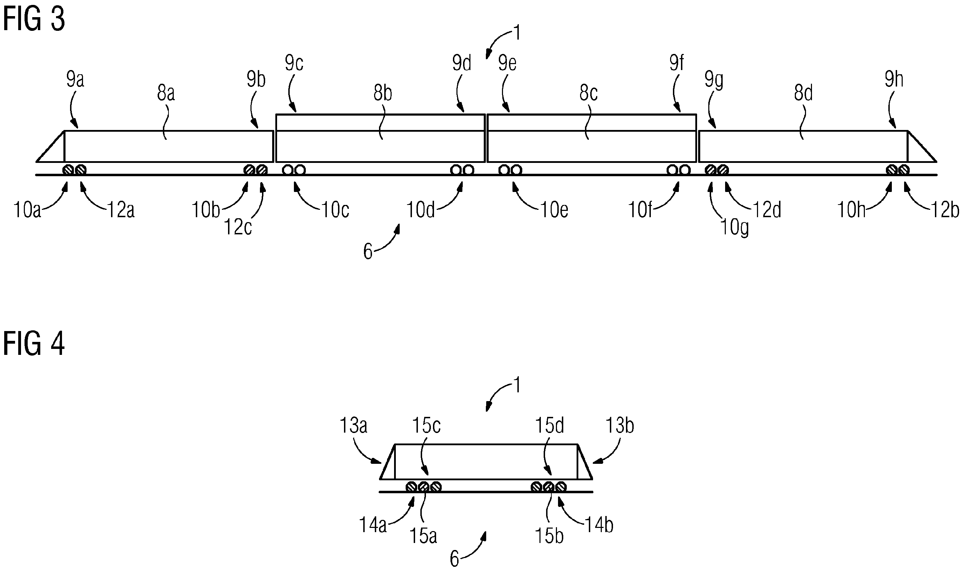

FIG 3 zeigt eine zweite Variante eines erfindungsgemäßen Regionalzugs 1 mit vier Wagen 8a, 8b, 8c, 8d. Der erste Wagen 8a (in FIG 2 links außen) und der vierte Wagen 8d stellen konventionelle Wagen dar, während der zweite Wagen 8c und der dritte Wagen 8c, die sich zwischen dem ersten Wagen 8a und dem vierten Wagen 8d befinden, als Doppelstock-Mittelwagen 8b, 8c ausgebildet sind. Der zweite Wagen 8b und der dritte Wagen 8c können auch als konventionelle Wagen (keine Doppelstock-Ausführung) ausgebildet sein.

Alle vier Wagen 8a, 8b, 8c, 8d stützen sich jeweils in ihren Endbereichen 9a, 9b, 9c, 9d, 9e, 9f, 9g, 9h auf ein Drehgestell 10a, 10b, 10c, 10d, 10e, 10f, 10g, 10h ab. Jedes Drehgestell 10a, 10b, 10c, 10d, 10e, 10f, 10g, 10h umfasst ein Paar Radsätze. Dabei umfasst jeder Radsatz zwei einander gegenüberliegende Räder, die auf einer Schiene (dargestellt) entlang bewegt werden können. Jedes Drehgestell 10a, 10b, 10c, 10d, 10e, 10f, 10g, 10h umfasst demnach vier Räder. Es sind im Rahmen der Erfindung auch Drehgestelle/Fahrwerke 10a, 10b, 10c, 10d, 10e, 10f, 10g, 10h vorsehbar, die jeweils mehr oder weniger Räder bzw. Radsätze aufweisen.

Ein Antriebssystem 6 des Regionalzugs 1 umfasst permanentmagneterregte Motoren 12a, 12b, die in einem Bereich des (in FIG 3 links befindlichen) Drehgestells 10a des ersten Wagens 8a und in einem Bereich des (in FIG 3 rechts befindlichen) Drehgestells 10h des vierten Wagens 8d angeordnet sind.

Das Antriebssystem 6 des Regionalzugs 1 umfasst zudem Asynchronmotoren und/oder Reluktanzmotoren 12c, 12d, die in einem (in FIG 2 rechts befindlichen) Endbereich 9b des ersten Wagens 8a und in einem (in FIG 2 links befindlichen) Endbereich 9g des vierten Wagens 8d in einem Bereich der dazugehörigen Drehgestelle 10b, 10g angeordnet sind und die dazugehörigen Räder antreiben.

Der zweite Wagen 8b und der dritte Wagen 8c weisen keine Antriebsmotoren auf.

FIG 4 zeigt eine erfindungsgemäße Güterzuglokomotive 1.

Die Güterzuglokomotive 1 stützt sich an einer ersten Stirnseite 13a auf ein erstes Drehgestell 14a ab. An einer zweiten Stirnseite 13b stützt sie sich auf ein zweites Drehgestell 14b ab.

Jedes Drehgestell 14a, 14b umfasst drei Radsätze. Dabei umfasst jeder Radsatz zwei einander gegenüberliegende Räder, die auf einer Schiene (dargestellt) entlang bewegt werden können. Jedes Drehgestell 14a, 14b umfasst demnach sechs Räder. Es sind im Rahmen der Erfindung auch Drehgestelle 14a, 14b vorsehbar, die jeweils mehr oder weniger Räder bzw. Radsätze aufweisen.

Ein Antriebssystem 6 der Güterzuglokomotive 1 umfasst Asynchronmotoren und/oder Reluktanzmotoren 15a, 15b, die jeweils einen mittleren Radsatz der beiden Drehgestelle 14a, 14b antreiben.

Das Antriebssystem 6 der Güterzuglokomotive 1 umfasst zudem permanentmagneterregte Motoren 15c, 15d, die die übrigen Radsätze der beiden Drehgestelle 14a, 14b antreiben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen im Rahmen der Ansprüche können vom Fachmann hieraus abgeleitet werden, ohne den Schutzumfang der Erfindung zu verlassen.

## Patentansprüche

1. Schienenfahrzeug (1) mit Radsätzen, die jeweils zwei gegenüberliegend angeordnete Räder umfassen, die wenigstens teilweise von einem Antriebssystem (6) mit einer Mehrzahl an Antriebsmotoren (7a, 7b, 7c, 7d, 11a, 11b, 11c, 11d, 11e, 11f, 12a, 12b, 12c, 12d, 15a, 15b, 15c, 15d) angetrieben werden, wobei
das Antriebsystem (6) wenigstens einen permanentmagneterregten Motor (7c, 7d, 11a, 11b, 11c, 11d, 12a, 12b, 15c, 15d) und wenigstens einen Asynchronmotor und/oder wenigstens einen Reluktanzmotor (7a, 7b, 11e, 11f, 12c, 12d, 15a, 15b) als Antriebsmotoren (7a, 7b, 7c, 7d, 11a, 11b, 11c, 11d, 11e, 11f, 12a, 12b, 12c, 12d, 15a, 15b, 15c, 15d) umfasst,
**dadurch gekennzeichnet, dass**
eine Anzahl an Radsätzen, die von einem oder mehreren permanentmagneterregten Motoren (7c, 7d, 11a, 11b, 11c, 11d, 12a, 12b, 15c, 15d) angetrieben werden, doppelt so groß ist wie eine Anzahl an Radsätzen, die von einem oder mehreren Asynchronmotoren und/oder Reluktanzmotoren (7a, 7b, 11e, 11f, 12c, 12d, 15a, 15b) angetrieben werden, oder
eine Anzahl an Radsätzen, die von einem oder mehreren permanentmagneterregten Motoren (7c, 7d, 11a, 11b, 11c, 11d, 12a, 12b, 15c, 15d) angetrieben werden, identisch ist mit einer Anzahl an Radsätzen, die von einem oder mehreren Asynchronmotoren und/oder Reluktanzmotoren (7a, 7b, 11e, 11f, 12c, 12d, 15a, 15b) angetrieben werden.

2. Schienenfahrzeug (1) nach Anspruch 1, bei dem die Mehrzahl an Antriebsmotoren (7a, 7b, 7c, 7d, 11a, 11b, 11c, 11d, 11e, 11f, 12a, 12b, 12c, 12d, 15a, 15b, 15c, 15d) im Wesentlichen gleiche Ständerelemente aufweist.

3. Schienenfahrzeug (1) nach Anspruch 1 oder 2, das wenigstens einen permanenterregten Motor (7c, 7d, 11a, 11b, 11c, 11d, 12a, 12b, 15c, 15d) und einen als Synchron-Reluktanzmotor ausgebildeten Reluktanzmotor (7a, 7b, 11e, 11f, 12c, 12d, 15a, 15b) umfasst.

## Claims

1. Rail vehicle (1) having wheelsets, each of which comprises two oppositely arranged wheels and which are driven at least partially by a drive system (6) comprising a plurality of drive motors (7a, 7b, 7c, 7d, 11a, 11b, 11c, 11d, 11e, 11f, 12a, 12b, 12c, 12d, 15a, 15b, 15c, 15d), wherein
the drive system (6) comprises at least one permanent magnet motor (7c, 7d, 11a, 11b, 11c, 11d, 12a, 12b, 15c, 15d) and at least one asynchronous motor and/or at least one reluctance motor (7a, 7b, 11e, 11f, 12c, 12d, 15a, 15b) as drive motors (7a, 7b, 7c, 7d, 11a, 11b, 11c, 11d, 11e, 11f, 12a, 12b, 12c, 12d, 15a, 15b, 15c, 15d),
**characterised in that**
a number of wheelsets driven by one or more permanent magnet motors (7c, 7d, 11a, 11b, 11c, 11d, 12a, 12b, 15c, 15d) is twice as large as a number of wheelsets driven by one or more asynchronous motors and/or reluctance motors (7a, 7b, 11e, 11f, 12c, 12d, 15a, 15b), or
a number of wheelsets driven by one or more permanent magnet motors (7c, 7d, 11a, 11b, 11c, 11d, 12a, 12b, 15c, 15d) is identical to a number of wheelsets driven by one or more asynchronous motors and/or reluctance motors (7a, 7b, 11e, 11f, 12c, 12d, 15a, 15b).

2. Rail vehicle (1) according to claim 1, in which the plurality of drive motors (7a, 7b, 7c, 7d, 11a, 11b, 11c, 11d, 11e, 11f, 12a, 12b, 12c, 12d, 15a, 15b, 15c, 15d) have substantially identical stator elements.

3. Rail vehicle (1) according to claim 1 or 2, which comprises at least one permanently excited motor (7c, 7d, 11a, 11b, 11c, 11d, 12a, 12b, 15c, 15d) and a reluctance motor (7a, 7b, 11e, 11f, 12c, 12d, 15a, 15b) embodied as a synchronous reluctance motor.

## Revendications

1. Véhicule (1) ferroviaire ayant des essieux, qui comprennent chacun deux roues montées en se faisant face, qui sont entraînées au moins en partie par un système (6) d'entraînement ayant une pluralité de moteurs (7a, 7b, 7c, 7d, 11a, 11b, 11c, 11d, 11e, 11f, 12a, 12b, 12c, 12d, 15a, 15b, 15c, 15d) d'entraînement, dans lequel le système (6) d'entraînement comprend au moins un moteur (7c, 7d, 11a, 11b, 11c, 11d, 12a, 12b, 15c, 15d) à excitation par aimant permanent et au moins un moteur asynchrone et/ou au moins un moteur (7a, 7b, 11e, 11f, 12c, 12d, 15a, 15b) à réluctance comme moteurs (7a, 7b, 7c, 7d, 11a, 11b, 11c, 11d, 11e, 11f, 12a, 12b, 12c, 12d, 15a, 15b, 15c, 15d) d'entraînement,
**caractérisé en ce que** le nombre d'essieux, qui sont entraînés par un ou par plusieurs moteurs (7c, 7d, 11a, 11b, 11c, 11d, 12a, 12b, 15c, 15d) à excitation par aimant permanent est deux fois plus grand que le nombre d'essieux, qui sont entraînés par un ou par plusieurs moteurs asynchrone et/ou moteurs (7a, 7b, 11e, 11f, 12c, 12d, 15a, 15b) à réluctance, ou
le nombre d'essieux, qui sont entraînés par un ou par plusieurs moteurs (7c, 7d, 11a, 11b, 11c, 11d, 12a, 12b, 15c, 15d) à excitation par aimant permanent est le même que le nombre d'essieux, qui sont entraînés par un ou par plusieurs moteurs asynchrones et/ou moteurs (7a, 7b, 11e, 11f, 12c, 12d, 15a, 15b) à réluctance.

2. Véhicule (1) ferroviaire suivant la revendication 1, dans lequel la pluralité de moteurs (7a, 7b, 7c, 7d, 11a, 11b, 11c, 11d, 11e, 11f, 12a, 12b, 12c, 12d, 15a, 15b, 15c, 15d) d'entraînement a des éléments statoriques sensiblement pareils.

3. Véhicule (1) ferroviaire suivant la revendication 1 ou 2, qui comprend au moins un moteur (7c, 7d, 11a, 11b, 11c, 11d, 12a, 12b, 15c, 15d) à excitation permanente et un moteur (7a, 7b, 11e, 11f, 12c, 12d, 15a, 15b) à réluctance constitué sous la forme d'un moteur à réluctance synchrone.
